(19) Europäisches Patentamt
European Patent Office
Office européen des brevets

(11) **EP 2 920 124 B1**

(12) **EUROPEAN PATENT SPECIFICATION**

(45) Date of publication and mention
of the grant of the patent:
**07.06.2023 Bulletin 2023/23**

(21) Application number: **13812149.6**

(22) Date of filing: **19.11.2013**

(51) International Patent Classification (IPC):
*C03C 8/02* *(2006.01)*    *C03C 8/12* *(2006.01)*
*C03C 8/14* *(2006.01)*    *C03C 8/20* *(2006.01)*
*C03C 14/00* *(2006.01)*    *C23C 4/10* *(2016.01)*
*C23D 5/00* *(2006.01)*

(52) Cooperative Patent Classification (CPC):
**C03C 3/093; C03C 4/20; C03C 8/02; C03C 8/14;**
**C03C 8/20; C03C 14/004; C23C 4/10;**
C03C 2207/04; C03C 2214/04

(86) International application number:
**PCT/IB2013/060229**

(87) International publication number:
**WO 2014/076679 (22.05.2014 Gazette 2014/21)**

(54) **GLASS MATRIX COMPOSITE MATERIAL**

GLASMATRIXVERBUNDSTOFF

MATÉRIAU COMPOSITE DE MATRICE DE VERRE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **19.11.2012 IT MI20121966**

(43) Date of publication of application:
**23.09.2015 Bulletin 2015/39**

(73) Proprietor: **3V Enterprise SpA**
**20121 Milano (IT)**

(72) Inventors:
• **GRESSINI, Stefano**
**I-30027 San Donà di Piave (VE) (IT)**
• **GRANZOTTO, Massimo**
**I-30141 Murano (VE) (IT)**

(74) Representative: **Pistolesi, Roberto et al**
**Dragotti & Associati Srl**
**Via Nino Bixio, 7**
**20129 Milano (IT)**

(56) References cited:
WO-A1-91/04562          DE-A1- 4 038 254
US-A- 2 249 007          US-A- 2 851 376
US-A- 3 197 291          US-A- 3 775 164
US-A1- 2010 178 214

• **VOLKER H: "FORTSCHRITTE BEI DEN**
**EMAILLIERVERFAHREN", TECHNISCHE**
**RUNDSCHAU, HALLWAG AG, CH, vol. 87, no. 49,**
**8 December 1995 (1995-12-08), page 34/35,**
**XP000548034, ISSN: 1023-0823**
• **BOETTCHER G O: "DIE ENTWICKLUNG DER**
**EMAILLIERTECHNIK", METALLOBERFLACHE,**
**CARL HANSER VERLAG. MUNCHEN, DE, vol. 44,**
**no. 11, 1 November 1990 (1990-11-01), pages**
**521-526, XP000219693,**

**Description**

The present invention relates to an improved glass-matrix composite material, in particular for forming linings of the internal walls of reactors used in the chemical and pharmaceutical industries.

Linings made using a glass-matrix composite for the aforementioned use are well-known in the art. For example document US2249007 and document US3197291 disclose this kind of glass-matrix composites.

The glass material on which the composite is based consists of a millimetric layer of silica glass and boric anhydride, modified with alkaline-earth and alkaline metal oxides, said layer being applied to a carbon-steel sheet inside a chemical reactor using the enamelling or porcelain-coating technique. The glass matrix is required in the formulation of the material mainly because it must ensure a sufficient chemical inertia upon contact with particularly aggressive process fluids which are typical of the chemical industry; secondly, glass is particularly suitable for processes of the pharmaceutical type in which a high degree of cleanliness or even sterilization of the reactors is required in order to ensure compliance with national and international standards.

However, the linings of this type known hitherto have the drawback that they have a low thermal conductivity which obviously has a negative effect on the performance of the reactor and in particular on the heating and cooling cycles for the reactor and its contents.

The glass matrix of the known linings has intrinsic characteristics, in addition to adhesion to the steel substrate, which condition the performance thereof. In particular:

(a) Resistance to acid corrosion

Glass is an amorphous material and has optimum corrosion-resistance properties since it does not have crystalline grain boundaries; these boundaries represent high-energy zones in which chemical attack tends to occur (this often happens during the corrosion of metallic materials).

(b) Thermal expansion

The material consisting of steel and glass enamel is per se a composite material which combines two materials having very different properties and structures.

Carbon steel is a fairly tough metal alloy which has an excellent behaviour in response to both tensile and compressive stresses.

Glass, on the other hand, is a material which is fragile at room temperature, with poor tensile strength properties, despite its good compressive strength; its linear thermal expansion greatly influences the structure of the composite, in particular when considering cooling from high temperatures [below the Tg (vitrification temperature) the material is an elastic range with limited capacity for relaxation of the tensions induced].

In the case of the steel-glass combination it is necessary to use oxidic compositions of the glass such that the thermal expansion is slightly less than that of steel, in order to obtain, after cooling of the composite, a final state of suitable residual pre-compression induced in the glass.

(c) Surface roughness

The most important and typical surface properties of porcelain-coated glass are its low roughness (and hence low porosity) and coloured and glossy aspect which is well-suited for surfaces to be used, for example, for the synthesis of medicinal products. The attention given to the surface appearance is important since, inside the reactors, it is sometimes necessary to be able to detect with the naked eye the presence of foreign bodies, for which reason the glass lining is usually colourless, in particular white.

In order to modify the properties of the lining and in particular the thermal conductivity, in the past attempt have been made to introduce into the composite material a secondary phase chosen from among metals and their alloys or from among ceramic materials, even if the former appeared to be the preferred choice since their electron conduction properties would have guaranteed high electrical conductivity as well as thermal conductivity values.

In fact the thermal conductivity of materials is manifested in two ways depending on the structure of the material considered.

Metallic materials have an atomic configuration such that the electrons are free to move through the material and their "cloud" allows easy energy (heat) transportation. From a physical point of view, it may be stated that this is due to the fact that the valence band of the metal atoms is at an energy level very close to the conduction band: it is therefore simple in energy terms for the electrons to migrate into the conduction band and move through the material (they also do easily this at low temperatures); metals are, for this reason, not only optimum electrical, but also optimum thermal conductors.

The same is not true of ceramic materials (which are amorphous or crystalline): in their structure the conduction band is separated by an energy gap which cannot be easily overcome by the electrons unless they are supplied with sufficient energy to make the transition to the outermost level (this may happen, for example, when the temperature is high or when, in general, energy is supplied from the outside).

Ceramic materials are not, therefore, particularly efficient electron conductors (they could, however, become so by means of "doping" with acceptor or donor atoms which make the material semiconductive).

However, tests carried out using metals and their alloys have come up against the obstacle of the surrounding conditions where an acid corrosion resistance is required. In fact, the introduction of a secondary phase may be compared with the artificial creation of grain boundaries with a consequent increase in the probability of corrosive attack at the interface between the two phases, unless the interface energy is limited as far as possible by ensuring good adhesion between the two materials: in the case of metals inserted in a glass matrix the compatibility - in particular as regards the adhesion interface between matrix and secondary phase, which is by no means adequate - is the first aspect to be considered.

In fact, an evident heterogeneity in the corrosion behaviour would arise, since metals - unless they are noble metals (which are by no means low-cost) - have a limited if not very poor resistance to corrosion, especially acid corrosion, and have a great tendency towards oxidisation at high temperatures (e.g. during the enamelling heat cycles) and consequently a reduction in the conductivity. Ultimately, the tests carried out using certain glass-matrix composite materials, the metallic secondary phase of which should in theory induce better thermal and electrical conduction characteristics, have not given rise during use in plants to industrially advantageous results in terms of performance.

It has now been found - and this forms the main object of the present invention - that the thermal conductivity characteristics of the composite material forming the lining, and therefore of the glass matrix which forms the main component thereof, are substantially improved by adding to the initial composition, which is in the form of a flaky or granular glass frit, to which the usual additives for forming the conventional glass matrix of these linings have been added, a secondary phase consisting of tin oxide according to claim 1.

In fact, it has been found that, by adding to the initial composition an effective amount of a secondary phase as defined above, it is possible not only to improve significantly the thermal conductivity of the lining obtained, but also maintain a good level of compatibility with the glass matrix in terms of incorporation into the matrix itself, thermal expansion and density.

The materials forming the secondary phase of the composite according to the present invention therefore form part of the class of crystalline ceramic materials, such that, in the light of the above general considerations regarding possible secondary phases, the results achieved with the present invention appear to be even more surprising.

In order to explain, without any limiting meaning, the results achieved with the present invention, it must be firstly underlined how the ceramic materials considered are devoid of additional doping components, as instead was instead proposed by the prior art. Their performance in terms of thermal conductivity may be explained by analysing their behaviour when supplied with thermal energy.

In fact, the thermal energy supplied to a material (at temperatures higher than absolute zero) is stored in the material in the form of atomic and molecular vibrational energy; each atom, considered bonded to their adjacent atoms, may be compared with a mass-spring system which oscillates mechanically in response to a force applied.

The oscillations of each single atom, which occur as stationary waves and are defined as "phonons", are naturally perceived by the atoms situated in the vicinity.

Based on the elasticity analogy mentioned, the greater the bond between atoms (elastic constant of the spring) and the smaller the mass of the atom (mass attached to the spring), the greater the oscillation frequency of the system in response to temperature (force applied to the spring). As for transmission of the oscillation, it is all the more effective, the more ordered and homogeneous the molecular structure of the ceramic material.

Amorphous materials such as glass therefore have a limited probability of allowing the transmission of mechanical waves through their structure: there is often phase-opposition between photons which results in a notable reduction in amplitude and significant reduction in the thermal conductivity. Glass is therefore a material with a low thermal conductivity (it is in fact considered to be an insulant) because, although the silica which forms the base lattice, is a covalent short-range ordered structure, both the low medium and long-range order and the heterogeneity of the atomic masses of the constituent masses make phonon propagation difficult. The conduction is also negatively affected by the presence of the lattice modifier metals (mainly alkaline and alkaline-earth metals) which are present in the interstices of the silica structure and linked by weak ion bonds to the "non-bridging" oxygens.

On the other hand, crystalline ceramic materials characterized by long-range order and having atoms which are fairly small in size and similar to each other have an excellent propensity for vibrational transmission and therefore thermal conduction. In such cases, in fact, the phonon scattering is considerably less compared to that typical of an amorphous material, because both the phonon-phonon interaction effect and the imperfections and "grain boundary" defects are not present (thus demonstrating the importance of the crystalline defects which are often concentrated in grain boundaries, for example the ceramic monocrystals have thermal conductivity values which are decidedly higher than those of polycrystals).

In this context also it is useful to analyze the part played by phonons in the thermal conduction of ceramic solids.

The thermal conduction in solids may occur in two different ways: the first way is electron-based, whereby the conduction electrons deal with the transportation of energy as well as charge, imparting also thermal conduction characteristics to the material in which they move; the second way is phonon-based, whereby the function of energy transportation is assigned to the phonons, or stationary atomic-vibration waves.

In metallic materials, according to the Debye theory, the constant-volume specific heat is definable as the sum of the addend associated with electrical conduction and a characteristic of phononic vibrations:

$$c_v = f(T)_{electron} + f(T^3)_{phonon}$$

At temperatures close to zero Kelvin the electron contribution will naturally prevail since in a right-hand neighbourhood of zero the phonon contribution is greater than the former by an infinitesimal of an order.

On the other hand, at higher temperatures, the thermal conduction will be regulated by the phononic vibration (infinite of the third order).

Differently, in crystalline ceramic materials with loss-mass atoms and strong covalent bonds forming the structure, the phonon contribution in the thermal conductivity is considerable as from temperatures a few degrees above zero Kelvin.

The atomic vibration produced by thermal energy supplied to the material at a temperature higher than absolute zero involves the oscillating displacement of the atom from a stable equilibrium position.

The atoms of ceramic materials are linked together by very energetic and strong covalent bonds which are characterized by an equilibrium distance, known as interatomic bond distance (xo).

According to a reasonably accurate mechanical analogy, the equilibrium system which describes the atom-atom covalent system (for example =C=C=) is comparable to a mass-spring model in which the mass is the atomic mass and the spring represents the bond of the atom itself with its closest neighbours.

Such a system, when subject to an external force, will have, in an intuitive and qualitative manner, a vibration which is all the greater the greater the "elasticity" of the spring and the smaller the mass attached to it.

Quantatively this means that a high elastic constant and a small mass, when subjected to an external force, start to oscillate with a harmonic movement having a high frequency $\omega$.

On the other hand, if the bond is less strong (for example that of modifier oxides in the glass, characterized by an ion bond), the oscillation frequency is low and wave propagation is not particularly favoured.

If F is the external force which upsets the equilibrium of the system, m is the mass attached to the spring, a is the acceleration imparted by the force F to the mass, k is the elastic constant of the spring, and x is the displacement induced by the force F applied to the mass, according to Hooke's law and Newton's law, the following equations may be formulated:

$$F = -kx$$

$$ma = -kx$$

$$a = -\frac{k}{m}x = -\omega^2 x$$

$$\omega = \sqrt{\frac{k}{m}}$$

From this latter equation it can be seen, as expected, that the oscillation frequency depends on the elastic constant and the mass of the atom.

These considerations of a purely physical nature may be supplemented by a number of observations of a geometrical nature:

In the structure of the amorphous glass solids it is not possible to identify a long-range order: the silica tetrahedrons are arranged disordered in the volume of the material; the cavities due to the disorder are filled by the lattice modifier oxides. The thermal vibration mechanical waves, already characterized by low frequency, are also impeded by a disorderly structure which makes it difficult for them to pass through. Defects, imperfections and porosity also constitute obstacles for the phonons. The result is a very low thermal conductivity of vitreous ceramic materials.

In crystalline (including oxidic) ceramic solids there is long-range order, a low percentage of lattice defects and a high phonon frequency, so that all the preconditions for good thermal conductivity exist.

In the case of crystalline ceramics it is thus possible to define an "intrinsic" thermal conductivity which is ideal, namely typical of the structure and not dependent on the impurities present. According to Slack, said intrinsic thermal conductivity is directly proportional to the product of the mean atomic mass of the crystal (M) times the cube of the Debye temperature ($\theta_D$) times the volume of the crystalline base cell ($\delta$); the intrinsic conductivity is instead inversely proportional to the temperature and to the square of the Grueneisen constant ($\gamma$, i.e. the measurement of the "lack of harmonicity" of the crystal, namely the influence of the thermal expansion on the vibrational modes of the structure):

$$\kappa = B \frac{M \delta \theta_D}{\gamma T^2}$$

The results of the tests carried out with a composite material composed of a glass matrix and a secondary phase consisting of tin dioxide will now be illustrated in detail.

The tin dioxide used was acquired commercially in the form of micrometric particles as defined hereinbelow.

Glass / micrometric tin dioxide composite material: composition

The composite material thus designed consists of a glass matrix with the following composition ranges:

| Component | Minimum % value by weight | Maximum % value by weight |
|---|---|---|
| $Al_2O_3$ | 0.5 | 4 |
| $B_2O_3$ | 0.5 | 3 |
| CaO | 0.5 | 4 |
| CoO | 0.1 | 2 |
| $Fe_2O_3$ | 0.1 | 2 |
| $K_2O$ | 0.5 | 3 |
| $Li_2O$ | 0.1 | 3 |
| MgO | 0.1 | 2 |
| $Na_2O$ | 5 | 13 |
| $SiO_2$ | 65 | 75 |
| $ZrO_2$ | 1 | 7 |

The particles of $SnO_2$ introduced are produced thermally from high-purity metallic tin by Keeling & Walker (UK).

The physical state of the tin dioxide is as follows: white powder, also comprising aggregates of spherical primary particles.

The density of the material (single particle) is 6.95 Kg/dm3.

The following table shows the other typical properties of the material:

| | | |
|---|---|---|
| | D10% | 0.1 $\mu$m |
| Particle size (Malvern Mastersizer) | D50% | 0.8 $\mu$m |
| | D90% | 2.4 $\mu$m |
| Surface area (BET method) | 9 m$^2$g$^{-1}$ | |
| Melting temperature [°C] | 1630 | |

Preparation and deposition of the composite material

5

The covering material to be deposited on the steel apparatus is prepared by mixing the glass matrix and the secondary phase micro-structured by means of the following procedure which is of a general nature (namely valid both for the primer and for the covering enamel). The $SnO_2$ powders are added to balls of $Al_2O_3$ in a mill, previously charged with the glass material of the standard matrix in the form of a flaky or granular glass frit, the water for forming the suspension, and the suspensions agents, in the following amounts:

| Standard glass frit | |
|---|---|
| | Percentage by weight referred to the amount of frit |
| Water | 40 - 50% |
| Clay | 0 - 5% |
| Bentonite | 0.1 - 0.5% |
| Potassium chloride | 0.1 - 0.25% |
| Sodium aluminate | 0.1 - 0.25% |
| Particles of $SnO_2$ | 5 - 40% |

In the case in question, milling was performed in a ball mill with a volume of 150 litres. The speed of rotation was 42 rpm. The milling time was about 200 minutes.

The percentage amount of $SnO_2$ particles is from 7% to 12% by volume referred to the total amount of glass frit. In particular, a percentage amount of 10% by volume of particles referred to the total amount of (pure) glass frit present in the suspension represents the optimum amount ensuring both the conductivity properties of the composite and good deposition on the steel substrate and an attractive smooth surface. The material is applied in the same way as the standard material (as regards both the primer and the covering enamel) and involves spraying the suspension by means of compressed-air guns which are entirely similar (except for the nozzle diameters) to paint-spraying guns.

| Matrix | Percentage amount of secondary phase $SnO_2$ | Mixing method | Total thickness applied (primer + enamel) | Firing temperature | Firing time |
|---|---|---|---|---|---|
| Standard glass | 1% - 15% | Ball mill | 1.0 - 2.2 mm | 830°C - 890°C | Depending on the part |

Comparison between the conductivity of standard enamel and conductive enamel

| | Standard enamel | Conductive enamel PHIGLASS with 5% vol. of $SnO_2$ particles in the glass matrix (not according to the invention) | Conductive enamel PHIGLASS with 7% vol. of $SnO_2$ particles in the glass matrix | Conductive enamel PHIGLASS with 10% vol. of $SnO_2$ particles in the glass matrix | Conductive enamel PHIGLASS with 12% vol. of $SnO_2$ particles in the glass matrix |
|---|---|---|---|---|---|
| Thermal conductivity measured [W/mK] | 1.28 | 1.29 | 1.35 | 1.55 | 1.58 |

The measurements of the thermal conductivity were carried using the so-called "Hot Disk" method.

The results of the above tests clearly illustrate the advantages achieved with the present invention.

As regards the choice as to the effective amount of secondary phase, in the example considered it is optimum with a percentage amount from 7% to 12% of $SnO_2$ because in this case other parameters, i.e. both those which are process-related (ease of application of the composition) and those relating to final characteristics, such as in particular the surface quality in terms of smoothness, remain unchanged.

Therefore, in the case considered, a preferred range of concentration of tin dioxide in the composition used for spraying is 10% by volume of the composition.

As regards the primer, namely the extremely thin layer which, as in conventional technology, ensures the adhesion of the glass matrix according to the invention to the internal wall of the reactor, it may also be of the conventional type, namely without the secondary phase component and/or have a composition different from that of the glass frit used to form the glass lining matrix.

## Claims

1. Improved glass-matrix composite material, in particular for forming linings of the internal walls of reactors used in the chemical and pharmaceutical industries, **characterized by** adding to the initial composition suitable for formation of the said glass matrix, said composition consisting of a flaky or granular glass frit and the usual additives for forming the conventional glass lining matrix, an effective amount of a secondary phase consisting of an oxide of tin ($SnO_2$), wherein said tin oxide is added in an amount of 7-12% by volume referred to the total amount of pure glass frit present in the initial composition.

2. Composite material according to Claim 1, **characterized in that** said tin oxide is added in an amount of 10% by volume referred to the total amount of pure glass frit present in the initial composition.

3. Method for forming a lining of glass-matrix composite material for the internal walls of a steel reactor, of the type in which an aqueous suspension comprising the conventional ingredients in the form of a flaky or granular glass frit together with the usual additives for forming said glass matrix is prepared in a mixer, in particular a ball mill, the composition is sprayed onto the internal walls of the reactor and the firing of the sprayed lining is performed at a temperature of about 800-900°C for a time depending on the dimensions of the lining, **characterized in that**, during said step of preparing said suspension, a component intended to form a secondary phase of said composite material is loaded into said mixer, said component being tin oxide ($SnO_2$) which is added in an amount as defined in each of Claims 1-2.

4. Steel reactor lined internally with a composite material as defined in Claim 1 or 2 and/or formed using the method according to Claim 3.

## Patentansprüche

1. Verbessertes Glasmatrix-Verbundmaterial, insbesondere zur Bildung von Auskleidungen der Innenwände von Reaktoren, die in der chemischen und pharmazeutischen Industrie verwendet werden, **dadurch gekennzeichnet, dass** der zur Bildung der Glasmatrix geeigneten Ausgangszusammensetzung, die aus einer flockigen oder körnigen Glasfritte und den üblichen Zusätzen zur Bildung der herkömmlichen Glasauskleidungsmatrix besteht, eine effektive Menge einer Sekundärphase zugesetzt wird, die aus einem Zinnoxid ($SnO_2$) besteht, wobei das Zinnoxid in einer Menge von 7-12 Vol.-%, bezogen auf die Gesamtmenge der in der Ausgangszusammensetzung vorhandenen reinen Glasfritte, zugesetzt wird.

2. Verbundmaterial nach Anspruch 1, **dadurch gekennzeichnet, dass** das Zinnoxid in einer Menge von 10 Vol.-%, bezogen auf die Gesamtmenge der in der Ausgangszusammensetzung vorhandenen reinen Glasfritte, zugesetzt wird,

3. Verfahren zur Bildung einer Auskleidung aus Glasmatrix-Verbundmaterial für die Innenwände eines Stahlreaktors, bei dem in einem Mischer, insbesondere in einer Kugelmühle, eine wässrige Suspension hergestellt wird, die die üblichen Bestandteile in Form einer flockigen oder körnigen Glasfritte sowie die üblichen Zusätze zur Bildung der Glasmatrix enthält, wobei die Zusammensetzung auf die Innenwände des Reaktors aufgesprüht wird und das Brennen der aufgesprühten Auskleidung bei einer Temperatur von etwa 800-900°C während einer von den Abmessungen der Auskleidung abhängigen Zeit durchgeführt wird, **dadurch gekennzeichnet, dass** während des Schritts der Herstellung der Suspension eine Komponente in den Mischer eingebracht wird, die dazu bestimmt ist, eine Sekundärphase des Verbundmaterials zu bilden, wobei es sich bei dieser Komponente um Zinnoxid ($SnO_2$) handelt, das in einer Menge zugesetzt wird, wie sie in einem der Ansprüche 1 bis 2 definiert ist.

4. Stahlreaktor, der innen mit einem Verbundmaterial nach Anspruch 1 oder 2 ausgekleidet und/oder nach dem Verfahren nach Anspruch 3 hergestellt ist.

**Revendications**

1. Matériau composite de matrice de verre amélioré, en particulier pour former des revêtements des parois internes de réacteurs utilisés dans les industries chimique et pharmaceutique, **caractérisé par** l'ajout à la composition initiale appropriée pour la formation de ladite matrice de verre, ladite composition se composant d'une fritte de verre friable ou granuleuse et des additifs habituels pour former la matrice de revêtement de verre classique, une quantité efficace d'une phase secondaire se composant d'un oxyde d'étain ($SnO_2$), ledit oxyde d'étain étant ajouté en une quantité de 7 à 12 % en volume par rapport à la quantité totale de fritte de verre pure présente dans la composition initiale.

2. Matériau composite selon la revendication 1, **caractérisé en ce que** ledit oxyde d'étain est ajouté en une quantité de 10 % en volume par rapport à la quantité totale de fritte de verre pure présente dans la suspension initiale.

3. Procédé de formation d'un revêtement de matériau composite de matrice de verre pour les parois internes d'un réacteur en acier, du type dans lequel une suspension aqueuse comprenant les ingrédients classiques sous la forme d'une fritte de verre friable ou granuleuse avec les additifs habituels pour la formation de ladite matrice de verre est préparée dans un malaxeur, en particulier un broyeur à boulets, la composition est pulvérisée sur les parois internes du réacteur et la cuisson du revêtement pulvérisé est effectuée à une température d'environ 800 à 900 °C pendant une durée qui dépend des dimensions du revêtement, **caractérisé en ce que**, lors de ladite étape de préparation de ladite suspension, un composant destiné à former une phase secondaire dudit matériau composite est chargé dans ledit malaxeur, ledit composant étant de l'oxyde d'étain ($SnO_2$) qui est ajouté en une quantité telle que définie dans chacune des revendications 1 à 2.

4. Réacteur en acier revêtu de manière interne avec un matériau composite tel que défini dans la revendication 1 ou 2 et/ou formé en utilisant le procédé selon la revendication 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2249007 A

- US 3197291 A